# EUROPEAN PATENT SPECIFICATION

(11) **EP 0 451 906 B1**
(45) Date of publication and mention of the grant of the patent: **15.06.1994**
(21) Application number: 91200792.9
(22) Date of filing: 05.04.1991
(51) Int. Cl.: A01K 1/12, A01J 7/00

(54) **An arrangement for positioning animals in a box**
Vorrichtung zum Positionieren von Tieren in einer Box
Dispositif pour positionner les animaux dans un box

(30) Priority: 10.04.1990 NL 9000836
(43) Date of publication of application: 16.10.1991
(60) Divisional application: 93200521.8
(73) Proprietor: C. van der Lely N.V., NL-3155 PD Maasland (NL)
(72) Inventor: van den Berg, Karel, NL-2971 BR Bleskensgraaf (NL); Fransen, René, NL-3135 ZD Vlaardingen (NL)
(74) Representative: Mulder, Herman

(56) References cited:
- EP-A- 0 188 303
- EP-A- 0 270 165
- EP-A- 0 306 579
- DE-A- 2 340 421
- DE-U- 8 508 312
- US-A- 4 010 714

## Description

The invention relates to an arrangement for positioning animals according to the preamble of claim 1.

An arrangement of the above defined type is known from the European patent application 0 188 303.

In this document there is described a so called "pass through cleaning and milking parlour". The cleaning/milking parlour includes guide rails at both sides of the milking parlour, the guide rails extending beyond a washing station which the animal has to pass before it arrives in the milking parlour. In this arrangement the animal can move up to the milking parlour, lured by a manger, which by means of a rod system and an adjusting mechanism can be moved outside the area bounded by the guide rails, so providing an exit for the animal. Between the washing station and the milking parlour there is a partition which is movable by means of a rod system from a position between the guide rails to a position outside the guide rails, in the latter position forming an entrance for the animal to the milking parlour.

When an animal has entered the milking parlour it is moved in the appropriate position by means of two positioning means which bear on either side against the animal, if the animal is halfway between the guide rails. Both positioning means can move symmetrically relative to the milking parlour, while with the aid of a tension spring an inwardly directed force is exerted on the positioning members. In the absence of an animal in the milking parlour the positioning members bear against stops.

When an animal enters the milking parlour the two positioning means are moved apart by the animal's body and as long as the animal is in the centre of the milking parlour, a light force on both sides of the animal is exerted by the positioning means.

When the animal is not in the centre, one of the positioning members will exert a greater force on the animal so as to force it back to the central position.

With an arrangement as described above the animal is located in a space wherein it can move to a certain extent, while for the positioning means there is reserved a relative large space between the rails.

The invention has for its object to provide an arrangement according to the preamble of claim 1 for positioning animals, such as cows, in a box which mitigates the above and other shortcomings particularly for use with automatic milking techniques.

To this end, the arrangement according to the invention as claimed in claim 1 is characterized in that each of the guide members is provided backwardly of its respective shaft (8,9) with a free end, being curved away from said first plane or substantially straight, directed backwardly relative to the pass-through direction of the box and a computer is provided controlling the positioning means in such a way that the free ends of the guide members are moved to and from the respective sides of the animal.

By means of the computer it is achieved that the animal arrives in an accurately defined lateral position in the box, while during entering or leaving the box the position means can be moved apart. A positioning of the animal in the forward direction can be obtained e.g. by providing the box with a manger containing concentrated fodder for the animal to eat. Although the movable means may also be designed independently of the positioning means, e.g. a separate door for letting the animal in and out of the box, in accordance with a further feature of the invention, it is also possible that the movable means for letting the animal into the box constitute part of the positioning means. In the latter case the box can advantageously be provided with a side entrance and exit, via which the animal can take place in or leave the box without the positioning means preventing this. In order to obtain a certain time delay between the cooperating guide members, in accordance with a further feature of the invention, a guide member can be coupled to the intermediate rod capable of movement in a slot which is in a fixed position relative to said intermediate rod. This renders it possible that the guide member for letting the animal into the box is moved through a wider angle than the other guide member.

Furthermore, in accordance with the invention, each of the guide members may be provided with a movable stop which, for at least part of the animal's time of stay in the box, is in contact with the relevant side of the animal. Such a stop ensures that there is obtained a contact area which adapts itself to the animal's body.

In accordance with a further feature of the invention, there are provided limiting means for bounding the movement of the guide members. A first limitation is obtained in that, in accordance with a further feature of the invention, the limiting means comprise the frame of the box. So as to provide a second limitation, in accordance with a further feature of the invention, the limiting means include a flexible connection between one of the guide members and the frame. In accordance with a further feature of the invention, the flexible connection may comprise a chain. Thus, there is obtained a connection which is easy to adjust, occupies little space and is yet solid.

In addition, in accordance with a still further feature of the invention, the flexible means may also constitute part of the control means. Thus, it is possible to use the flexible connection not only as a motion limitation but also as a control means for controlling the movable means. In a concrete embodiment in accordance with a further feature of the invention, the control means comprise an operating cylinder for controlling the movable means or the positioning means, insofar as the movable means constitute part thereof, or at least one of the guide members.

Furthermore, in accordance with the invention, there are provided blocking means which, in a concrete embodiment in accordance with a further feature of the invention, include a ratchet which, when the animal enters the box or has already entered same and when a guide member is moved into the direction of a relevant side of this animal or is in contact therewith, blocks a guide member movement in a direction opposite to the said direction.

In a particular embodiment of the invention, the ratchet housing is mounted on the box frame in such a manner as to be capable of hinging and is provided with a guide slot through which travels a rack that also constitutes part of the ratchet and is connected pivotably to one of the guide members.

The blocking imposed by the ratchet is effected, in accordance with the invention, by means of a pawl which is connected movably to the ratchet housing and, under the action of a spring, meshes with the teeth of the rack. In order to eliminate this blocking action, the ratchet can be provided, in accordance with a feature of the invention, with a decoupling member which, preferably, is constituted by an operating cylinder.

In accordance with a still further feature of the invention, the computer generates control signals for controlling one or more of the operating cylinders and/or the decoupling member. Hereby it is possible to achieve that the positioning of the animal is effected in a fully automated manner.

Although the above-described arrangement functions adequately, it is advantageous, in accordance with the invention, for the box to be mobile, so as to provide a flexible mode of operation.

For a better understanding of the invention and to show how the same may be carried into effect, reference will now be made, by way of example, to the accompanying drawings, in which:
Figure 1 is a plan view of the arrangement for positioning animals in a box, and
Figure 2 is a side view of a detail of this arrangement.

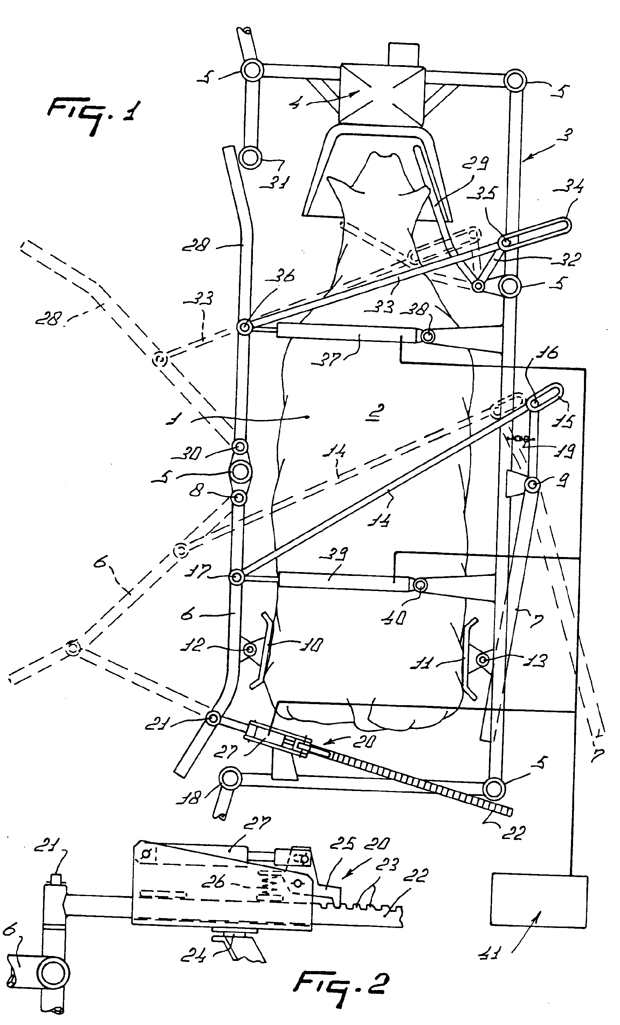

Figure 1 shows in a plan view a cow 1 in a box 2 provided with movable means 6 and 28 for letting the cow 1 in and out of the box 2 and control means 39 and 37, respectively, for the said movable means 6 and 28. The box 2 furthermore includes positioning means 6 and 7 for adjusting the cow 1 to a position defined relative to the box as well as for maintaining it in that position for at least part of its time of stay therein. In the embodiment shown in Figure 1, the portion 6 of the movable means constitutes part of the positioning means. The positioning means 6 and 7 adjust the cow 1 to a position defined with respect to a line in the longitudinal direction of the box 2.

More in particular, the positioning means 6, 7 are constituted by guide members which can be moved against a relevant side of the cow 1. The guide member which constitutes part of the positioning means 6, 7 is also denoted by the reference numeral 6. Likewise, the portion 28 of the movable means is constituted by a guide member denoted by the same reference numeral 28.

In the embodiment, the boundary of the box 2 is formed by a frame 3 comprising uprights 5 and the guide members 6 and 28. By means of the guide members 6 and 28 which are pivotal about substantially vertical shafts 8 and 30, respectively, the cow 1 can be let in or out of the box 2 by a signal supplied by a computer 41, after the respective control means 39 and 37 have been energized. On admitting the cow 1 into the box 2, the guide member 6 is in a position as indicated by interrupted lines in Figure 1. The access to the box 2 is then perfectly free for the cow 1, so that it can advance unimpededly thereinto until its head reaches a manger 4.

In order to achieve a co-operation between the positioning means 6 and 7, the guide member 6 is connected to the guide member 7 via an intermediate rod 14. The guide member 7 is pivotal about the substantially vertical pivot shaft 9 and is positioned by means of a vertical pivot shaft 16 in the guide slot 15 of the intermediate rod 14. In addition, in accordance with the embodiment of Figure 1, the two guide members 6, 7 are provided with stops 10 and 11, respectively, which stops are pivotal about substantially vertical shafts 12, 13. Hereby is effected a contact area which adapts itself to the cow's body when one or both of the stops 10, 11 are in contact with a relevant side of cow 1.

The operation of the positioning means 6, 7 is effected by means of a signal applied by the computer 41 to the control means, and more specifically to a pneumatic, hydraulic or electro-mechanical cylinder 39 constituting part thereof. The cylinder 39 is arranged capably of pivotal movement between a substantially vertical pivot shaft 40 provided on the frame 3 and a substantially vertical pivot shaft 17 located on the guide member 6. It will be obvious that the positioning means 6, 7 may also be controlled in a different manner, e.g. by an electric motor mounted in the floor of the box 2 and coupled to the vertical shaft 9.

In addition, there are provided limiting means to bound the movement of the guide members 6, 7. A first limiting means is constituted by the frame 3 of the box 2. A further limiting means 18, which in this embodiment is constituted by a corner post of the box 2, ensures that the guide member 6 is bounded in its movement. In a similar manner, the guide member 28 is bounded in its freedom of movement by the limiting means 31. Furthermore there are provided limiting means in the form of a flexible connection between the respective guide members 7, 6 and 28 and the frame 3 of the box 2. A first of these limiting means is constituted by a chain or rope 19 and is arranged between the frame 3 and the guide member 7.

In the construction described, the remaining flexible connections belonging to the latter limiting means are constituted by the control means 39, 37 for controlling the movable means 6, 28 or the positioning means 6, 7, in so far as the movable means 6, 28 constitute part thereof, or at least of one of the guide members 6, 7.

The construction described furthermore includes blocking means 20 (see Figure 2) which, when the cow 1 enters the box 2 or has already entered it and when a guide member 6, 7 is moved towards a relevant side of the cow 1 or is already in contact therewith, block a movement of the guide member 6, 7 in a direction opposite to the aforementioned direction. The blocking means include a ratchet 20 which by means of its housing is connected pivotably to the frame 3 of the box 2 via a vertical pivot shaft 24 and is provided with a guide slot, through which travels a rack 22 that also constitutes part of the ratchet and is connected pivotably to the guide member 6 about the vertical shaft 21. In addition, the ratchet 20 includes a pawl 25 which is connected movably to the housing and, under the action of a spring 26, meshes with the teeth 23 of the rack 22. In this embodiment, the bounding of the freedom of movement of the relevant guide member 6, 7, as imposed by ratchet 20, can be eliminated by means of a decoupling member 27 constituted by an operating cylinder.

In the embodiment of Figure 1, the box 2 has a manger 4, while furthermore there are provided expelling means, by means of which the cow 1 is forced to turn its head away from the manger 4. The expelling means also provide that the manger can be closed. For that purpose, the expelling means comprise a guide member 29 as well as a lever mechanism 32, 33, by means of which the guide member 29 is coupled to the movable means 28 for letting the cow 1 out of box 2. The lever mechanism 32, 33 comprises a lever arm 32 which is connected rigidly to the guide member 29 and which together with the guide member 29 constitutes a pivotal connection about the substantially vertical pivot shaft 30 to the frame 3 of the box 2, as well as an intermediate rod 33, the one end of which is connected pivotably via the substantially vertical pivot shaft 36 to the movable means 28 for letting the cow 1 out of box 2, while the other end is connected, capably of movement about the substantially vertical pivot shaft 35 in a slot 34 located in a fixed position relative to the intermediate rod 33, to the lever arm 32.

For the control of the movable means 28 for letting the cow 1 out of the box 2 and/or for that of the guide member 29, the control means 37 according to this construction are formed by an operating cylinder. This operating cylinder 37 may be a pneumatic, hydraulic or electro-mechanical cylinder.

The arrangement described in the foregoing operates as follows:

By decoupling the ratchet 20 and energizing the operating cylinder 39, the access to box 2 is released and the cow 1 can enter the box 2.

The coupling of the two guide members 6, 7 by means of the intermediate rod 14 ensures that, when the cow 1 walks into the box 2, the guide member 7 deflects to beyond the box 2 and thus does not constitute an obstruction for the entering cow 1.

Thereafter the cow 1 will advance further into the box 2 until its head reaches the manger 4. By energizing cylinder 39 again, the box 2 is closed and the two guide members 6, 7 move towards each other with a relative time delay. As a result of this, a portion of the space inside the box 2, seen in a line with respect to the longitudinal direction of box 2, is reduced. It will be obvious that, as long as cow 1 is approximately halfway between the two mutually advancing guide members 6, 7, it will experience a relatively gentle pressure, but that, when this is not the case, a greater pressure will be exercised on one side by a relevant stop 10 or 11, so that the cow 1 is compelled to move towards a position wherein there is an equal pressure on both sides.

A blocking of the guide members 6 and 7 by the ratchet 20 in the direction opposite to that of the guide member 6 ensures that the cow 1 cannot load the operating cylinder 39 and consequently move the guide members 6 and 7 in the outward direction.

When cow 1 is located in the position defined and fixed in the above-described manner, the treatment to which cow 1 is to be submitted can be started.

When after due course of time it is desired that the cow 1 should leave the box 2, then the ratchet 20 is decoupled, so that the hind side of the cow 1 is released, whereafter the cylinder 37 is energized.

The guide member 28 clears the exit and the intermediate rod 33 ensures that after a short time the guide member 29 follows this movement. The result is that, if cow 1 was still eating from the manger 4 or had already stopped doing so, its head is pushed in the direction of the exit.

It will be obvious that cow 1 will not like this posture and consequently will leave the box 2. The arrangement is then accessible again to the next animal.

## Claims

1. An arrangement for positioning animals, such as cows, in a box (2), which arrangement comprises movable means (6, 28) for letting an animal in and out of the box (2) in a pass-through forward direction substantially parallel to the longitudinal direction of the box as well as control means (37, 39) therefore, the arrangement further being provided with positioning means for adjusting the animal (1) to a position defined relative to a first vertical plane arranged in the longitudinal direction of the box (2) as well as for maintaining it in that position for at least part of its time of stay therein, said positioning means including two guide members (6, 7) being arranged near opposite longitudinal sides of the box (2) and pivotable about a respective first and second, substantially vertical shaft (8, 9), the arrangement further being provided with an intermediate rod (14) which is movably connected with both guide members (6, 7), whereby the connection points of the intermediate rod (14) with the guide members (6, 7) are situated at opposite sides of a second vertical plane through the substantially vertical shafts (8, 9), characterized in that each of the guide members (6, 7) is provided backwardly of its respective shaft (8, 9) with a free end, being curved away from said first plane or substantially straight, directed backwardly relative to the pass-through direction of the box (2), and a computer (41) is provided controlling the positioning means in such a way that the free ends of the guide members (6, 7) are moved to and from the respective sides of the animal (1).

2. An arrangement as claimed in claim 1, characterized in that the substantially vertical shafts (8, 9) are arranged approximately midway the box (2).

3. An arrangement as claimed in claim 1 or 2, characterized in that the free ends of the guide members (6, 7) reach until approximately the back of the box (2).

4. An arrangement as claimed in any one of the preceding claims, characterized in that there are provided limiting means (3, 18, 19, 39) for bounding the movement of the guide members (6, 7).

5. An arrangement as claimed in claim 4, characterized in that the limiting means comprise the frame (3) of the box (2).

6. An arrangement as claimed in claim 4 or 5, characterized in that the limiting means include a flexible connection (19, 37, 39) between one of the guide members (6, 7) and the box frame (3).

7. An arrangement as claimed in claim 6, characterized in that the flexible connection comprises a chain (19).

8. An arrangement as claimed in claim 6 or 7, characterized in that the flexible connection constitutes part of the control means (37, 39).

9. An arrangement as claimed in any one of the preceding claims, characterized in that one of the movable means (6) constitutes part of a guide member (6).

10. An arrangement as claimed in any one of the preceding claims, characterized in that the control means (37, 39) comprise an operating cylinder for controlling the movable means (6, 28) or the positioning means, insofar as the movable means (6, 28) constitute part thereof, or at least one of the guide members (6, 7).

11. An arrangement as claimed in any one of the preceding claims, characterized in that each of the guide members (6, 7) includes a movable stop (10, 11) which, for at least part of the animal's time of stay in the box (2), is in contact with the relevant side of the animal (1).

12. An arrangement as claimed in any one of the preceding claims, characterized in that a guide member (7) is coupled to the intermediate rod (14) capably of movement in a slot (15) which is in a fixed position relative to said intermediate rod (14).

13. An arrangement as claimed in any one of the preceding claims, characterized in that there are provided blocking means (20) which, when the animal (1) enters the box (2) or has already entered it and when a guide member (6) is moved into the direction of a relevant side of the animal (1) or is in contact therewith, block a guide member movement in a direction opposite to the said direction.

14. An arrangement as claimed in claim 13, characterized in that the blocking means include a ratchet (20).

15. An arrangement as claimed in claim 14, characterized in that the ratchet housing is mounted on the box frame (3) in such a manner as to be capable of hinging and is provided with a guide slot, through which travels a rack (22) that also constitutes part of the ratchet and is connected pivotably to one of the guide members.

16. An arrangement as claimed in claim 15, characterized in that the ratchet (20) includes a pawl (25) which is connected movably to the ratchet housing and, under the action of a spring (26), meshes with the teeth (23) of the rack (22).

17. An arrangement as claimed in claim 14, 15 or 16, characterized in that the ratchet (20) is provided with a decoupling means (27) which, preferably, is constituted by an operating cylinder for eliminating the limitation in freedom of movement of the relevant guide member as imposed by the ratchet (20).

18. An arrangement as claimed in claim 10 or 17, characterized in that the computer (41) generates control signals for controlling one or more operating cylinders (37, 39) and/or the decoupling member (27).

19. An arrangement as claimed in any one of the preceding claims, characterized in that the box (2) is a mobile one.

## Patentansprüche

1. Anordnung zum Positionieren von Tieren, wie z.B. von Kühen, in einer Box (2) mit einer beweglichen Vorrichtung (6, 28) zum Betreten und Verlassen der Box (2) durch ein Tier in einer Durchgangsrichtung nach vorn, die im wesentlichen parallel zu der Längserstreckung der Box ist, sowie mit einem Steuerglied (37, 39) für diese Vorrichtung, welche Anordnung ferner eine Positioniereinrichtung aufweist, um das Tier (1) in einer Position relativ zu einer ersten vertikalen Ebene zu positionieren, welche in Längsrichtung der Box (2) verläuft, und es in dieser Position zumindest für einen Teil seiner Aufenthaltsdauer in der Box zu halten, wobei die Positioniereinrichtung zwei Führungsglieder (6, 7) aufweist, die nahe gegenüberliegenden Längsseiten der Box (2) angeordnet und jeweils um eine erste und zweite im wesentlichen vertikale Achse (8, 9) schwenkbar sind; die Anordnung zum Positionieren hat ferner eine Zwischenstange (14), die mit beiden Führungsgliedern (6, 7) beweglich verbunden ist, wobei sich die Verbindungsstellen der Zwischenstange (14) mit den Führungsgliedern (6, 7) auf gegenüberliegenden Seiten einer zweiten vertikalen Ebene befinden, die durch die im wesentlichen vertikalen Achsen (8, 9) verläuft, dadurch gekennzeichnet, dass jedes Führungsglied (6, 7) hinter seiner jeweiligen Achse (8, 9) ein freies Ende aufweist, das von der ersten Ebene weggebogen oder im wesentlichen gerade und relativ zu der Durchgangsrichtung der Box (2) nach hinten gerichtet ist, und dass ein Computer (41) vorgesehen ist, der die Positioniereinrichtung derart steuert, dass die freien Enden der Führungsglieder (6, 7) auf die jeweilige Seite des Tieres (1) zu und von ihr weg bewegt werden.

2. Anordnung nach Anspruch 1, dadurch gekennzeichnet, dass die im wesentlichen vertikalen Achsen (8, 9) etwa in der Mitte der Box (2) angeordnet sind.

3. Anordnung nach Anspruch 1 oder 2, dadurch gekennzeichnet, dass die freien Enden der Führungsglieder (6, 7) bis etwa zur Rückseite der Box (2) verlängert sind.

4. Anordnung nach einem der vorhergehenden Ansprüche, dadurch gekennzeichnet, dass eine Begrenzungsvorrichtung (3, 18, 19, 39) zur Begrenzung der Bewegung der Führungsglieder (6, 7) vorgesehen ist.

5. Anordnung nach Anspruch 4, dadurch gekennzeichnet, dass zu der Begrenzungsvorrichtung der Rahmen (3) der Box (2) gehört.

6. Anordnung nach Anspruch 4 oder 5, dadurch gekennzeichnet, dass die Begrenzungsvorrichtung eine flexible Verbindung (19 37, 39) zwischen einem der Führungsglieder (6, 7) und dem Boxrahmen (3) aufweist.

7. Anordnung nach Anspruch 6, dadurch gekennzeichnet, dass die flexible Verbindung eine Kette (19) aufweist.

8. Anordnung nach Anspruch 6 oder 7, dadurch gekennzeichnet, dass die flexible Verbindung einen Teil des Steuergliedes (37, 39) bildet.

9. Anordnung nach einem der vorhergehenden Ansprüche, dadurch gekennzeichnet, dass eine der beweglichen Vorrichtungen (6) Bestandteil eines Führungsgliedes (6) ist.

10. Anordnung nach einem der vorhergehenden Ansprüche, dadurch gekennzeichnet, dass das Steuerglied (37, 39) einen Arbeitszylinder zum Steuern der beweglichen Vorrichtung (6, 28) oder der Positioniereinrichtung, soweit die bewegliche Vorrichtung (6, 28) Teil der Positioniereinrichtung ist, oder zum Steuern zumindest eines der Führungsglieder (6, 7) aufweist.

11. Anordnung nach einem der vorhergehenden Ansprüche, dadurch gekennzeichnet, dass jedes Führungsglied (6, 7) einen beweglichen Anschlag (10, 11) aufweist, der zumindest während eines Teiles der Aufenthaltsdauer des Tieres in der Box (2) mit der jeweiligen Seite des Tieres (1) in Kontakt ist.

12. Anordnung nach einem der vorhergehenden Ansprüche, dadurch gekennzeichnet, dass ein Führungsglied (7) mit der Zwischenstange (14) gekuppelt und in einem Schlitz (15) verschiebbar ist, der relativ zu der Zwischenstange (14) lagefest angeordnet ist.

13. Anordnung nach einem der vorhergehenden Ansprüche, dadurch gekennzeichnet, dass eine Blockierung (20) vorgesehen ist, die, wenn das Tier (1) die Box (2) betritt oder bereits betreten hat und ein Führungsglied (6) in Richtung auf eine jeweilige Seite des Tieres (1) bewegt wird oder mit dieser Seite in Kontakt steht, die Bewegung eines Führungsgliedes in einer zu dieser Richtung entgegengesetzten Richtung blockiert.

14. Anordnung nach Anspruch 13, dadurch gekennzeichnet, dass die Blockierung eine Sperre (20) aufweist.

15. Anordnung nach Anspruch 14, dadurch gekennzeichnet, dass das Gehäuse der Sperre an dem Boxrahmen (3) schwenkbar angeordnet und mit einem Führungsschlitz versehen ist, durch den eine Zahnstange (22) hindurchgeführt ist, die ebenfalls Bestandteil der Sperre und mit einem der Führungsglieder schwenkbar verbunden ist.

16. Anordnung nach Anspruch 15, dadurch gekennzeichnet, dass die Sperre (20) eine Sperrklinke (25) aufweist, die mit dem Gehäuse der Sperre beweglich verbunden ist und unter der Kraft einer Feder (26) in die Zähne (23) der Zahnstange (22) eingreift.

17. Anordnung nach Anspruch 14, 15 oder 16, dadurch gekennzeichnet, dass die Sperre (20) eine Entriegelungsvorrichtung (27) aufweist, die vorzugsweise durch einen Arbeitszylinder gebildet ist, um die von der Sperre (20) bewirkte Begrenzung der Bewegungsfreiheit des jeweiligen Führungsgliedes aufzuheben.

18. Anordnung nach Anspruch 10 oder 17, dadurch gekennzeichnet, dass der Computer (41) Steuersignale zum Steuern eines oder mehrerer Arbeitszylinder (37, 39) und/oder des Entriegelungsgliedes (27) erzeugt.

19. Anordnung nach einem der vorhergehenden Ansprüche, dadurch gekennzeichnet, dass die Box (2) transportabel ist.

## Revendications

1. Dispositif pour positionner des animaux tels que des vaches dans une stalle (2), cet arrangement comprenant des moyens mobiles (6, 28) pour faire entrer un animal dans la stalle (2) et pour l'en faire sortir dans un sens de passage vers l'avant pratiquement parallèle au sens longitudinal de la stalle, ainsi que des moyens de commande (37, 39) à cet effet, le dispositif étant muni en outre de moyens de positionnement pour ajuster l'animal (1) en une position définie par rapport à un premier plan vertical situé dans le sens longitudinal de la stalle (2) ainsi que pour le maintenir dans cette position pendant une partie au moins de son temps de séjour dans la stalle, lesdits moyens de positionnement comprenant deux organes de guidage (6, 7) disposés près des côtés longitudinaux opposés de la stalle (2) et pouvant pivoter autour d'un premier et d'un deuxième arbre respectifs (8, 9) sensiblement verticaux, le dispositif étant muni en outre d'une barre intermédiaire (14) reliée de manière mobile aux deux organes de guidage (6, 7), ce qui fait que les points de jonction de la barre intermédiaire (14) avec les organes de guidage (6, 7) sont situés sur les côtés opposés d'un deuxième plan vertical passant par les arbres (8, 9) sensiblement verticaux,
**caractérisé** en ce que chacun des organes de guidage (6, 7) est muni en arrière de son arbre respectif (8, 9) d'une extrémité libre étant courbée en s'éloignant dudit premier plan ou étant sensiblement rectiligne, et dirigée vers l'arrière par rapport au sens de passage de la stalle (2), et un ordinateur (41) est prévu pour commander les moyens de positionnement de telle manière que les extrémités libres des organes de guidage (6,7) sont rapprochées et écartées des flancs respectifs de l'animal (1).

2. Dispositif selon la revendication 1, caractérisé en ce que les arbres (8, 9) sensiblement verticaux sont placés approximativement au milieu de la longueur de la stalle (2).

3. Dispositif selon la revendication 1 ou 2, caractérisé en ce que les extrémités libres des organes de guidage (6, 7) s'étendent approximativement jusqu'à l'extrémité arrière de la stalle (2).

4. Dispositif selon l'une quelconque des revendications précédentes, caractérisé en ce qu'il comporte des moyens limiteurs (3, 18, 19, 39) pour limiter le mouvement des organes de guidage (6, 7).

5. Dispositif selon la revendication 4, caractérisé en ce que les moyens limiteurs comprennent le bâti (3) de la stalle (2).

6. Dispositif selon la revendication 4 ou 5, caractérisé en ce que les moyens limiteurs comprennent une liaison flexible (19, 37, 39) entre un des organes de guidage (6, 7) et le bâti (3) de la stalle.

7. Dispositif selon la revendication 6, caractérisé en ce que la liaison flexible comprend une chaîne (19).

8. Dispositif selon la revendication 6 ou 7, caractérisé en ce que la liaison flexible fait partie des moyens de commande (37, 39).

9. Dispositif selon l'une quelconque des revendications précédentes, caractérisé en ce qu'un (6) des moyens mobiles fait partie d'un organe de guidage (6).

10. Dispositif selon l'une quelconque des revendications précédentes, caractérisé en ce que les moyens de commande (37, 39) comprennent un vérin actionneur pour commander les moyens mobiles (6, 28) ou les moyens positionneurs, pour autant que les moyens mobiles (6, 28) en fassent partie, ou au moins un des organes de guidage (6, 7).

11. Dispositif selon l'une quelconque des revendications précédentes, caractérisé en ce que chacun des organes de guidage (6, 7) comporte une butée mobile (10, 11) qui est en contact avec le flanc correspondant de l'animal (1) pendant au moins une partie du temps de séjour de l'animal dans la stalle (2).

12. Dispositif selon l'une quelconque des revendications précédentes, caractérisé en ce qu'un organe de guidage (7) est couplé à la barre intermédiaire (14) en étant capable de faire mouvement dans une fente (15) qui est en position fixe par rapport à ladite barre intermédiaire (14).

13. Dispositif selon l'une quelconque des revendications précédentes, caractérisé en ce que sont prévus des moyens de blocage (20) qui, lorsque l'animal (1) entre dans la stalle (2) ou bien y est déjà entré, et quand un organe de guidage (6) est entraîné en direction d'un flanc correspondant de l'animal (1), bloquent le mouvement d'un organe de guidage dans un sens opposé à ladite direction.

14. Dispositif selon la revendication 13, caractérisé en ce que les moyens de blocage comprennent un encliquetage (20).

15. Dispositif selon la revendication 14, caractérisé en ce que le boîtier de l'encliquetage est monté sur le bâti(3) de la stalle de manière à être capable de pivoter et est muni d'une fente de guidage dans laquelle circule une crémaillère (22) qui fait également partie de l'encliquetage et est reliée de manière pivotante à un des organes de guidage.

16. Dispositif selon la revendication 15, caractérisé en ce que l'encliquetage (20) comporte un cliquet (25) relié de manière mobile au boîtier de l'encliquetage et qui, sous l'action d'un ressort (26), engrène avec les dents (23) de la crémaillère (22).

17. Dispositif selon la revendication 14, 15 ou 16, caractérisé en ce que l'encliquetage (20) est muni d'un moyen de découplage (27) qui est, de préférence, constitué par un vérin actionneur pour éliminer la limitation de la liberté de mouvement de l'organe de guidage correspondant, telle qu'imposée par l'encliquetage (20).

18. Dispositif selon la revendication 10 ou 17, caractérisé en ce que l'ordinateur (41) émet des signaux de commande pour commander un ou plusieurs vérins actionneurs (37, 39) et/ou l'organe de découplage (27).

19. Dispositif tel que revendiqué dans l'une quelconque des revendications précédentes, caractérisé en ce que la stalle (2) est une stalle mobile.
